# EUROPEAN PATENT APPLICATION

(11) **EP 1 801 408 A2**
(43) Date of publication of application: **27.06.2007**
(21) Application number: 06126509.6
(22) Date of filing: 19.12.2006
(51) Int. Cl.: F02M 37/22

(54) **Filter for Diesel fuel including a water separator**

(30) Priority: 23.12.2005 IT TO20050906
(71) Applicant: Delgrosso S.p.A., 10042 Nichelino TO (IT)
(72) Inventor: Delgrosso, Umberto, 10042, Nichelino (Torino) (IT)
(74) Representative: Marchitelli, Mauro

(57) **Abstract**

Filter for diesel fuel, comprising:
- a casing (12) having a side wall (14), a bottom (16) and a closing plate (18), the closing plate having a plurality of holes (24) for inlet of the fuel to be filtered and a central hole (20) for outlet of the filtered fuel;
- a tubular sleeve (36), set coaxially within the casing (12) and aligned to the hole for outlet of the fuel (20);
- a filter element (38), set in the space comprised between the tubular sleeve (36) and the side wall (14) of the casing (12), in which underneath the filter element (38) a collection chamber (66) is defined and in which the tubular sleeve (36) has a bottom end that communicates with the collection chamber (66) and a top end in fluid communication with the outlet hole (20); and
- a water separator (48) with a separation membrane (58) formed by a micromesh, set between the top end of the tubular sleeve (36) and the outlet hole (20).

## Description

The present invention relates to a filter for diesel fuel provided with a filter element and a water-separator element.

Filters for diesel fuel provided with separation means for the water contained in the fuel are described for example by the documents Nos. EP-B-1229984 and EP-A-1267068, which describe filters with the characteristics forming the subject of the preamble of Claim 1.

In the solution described by EP-B1-1229984, the water separator is situated in a collection chamber set underneath the filter element, at the bottom end of a tubular sleeve the top end of which communicates with a hole for outlet of the fuel.

In the solution described by EP-A-1267068, the water separator has the form of a basket housed within the tubular sleeve, through which the filtered fuel comes out.

The purpose of the present invention is to provide a filter for diesel fuels of an improved type that will enable further improvement of the conditions of separation of water as compared to the known solutions cited previously.

According to the present invention, said purpose is achieved by a filter for diesel fuel having the characteristics forming the subject of Claim 1.

In the solution according to the present invention, the water separator is set between the top end of the tubular sleeve and the outlet hole. This solution enables the water separator to be positioned as far as possible from the water-collection chamber situated at the bottom end of the filter. In this way, the flow of the fuel is slower and less turbulent, which enables drops of water of larger dimensions in suspension to be obtained, which can be separated more easily from the flow of fuel.

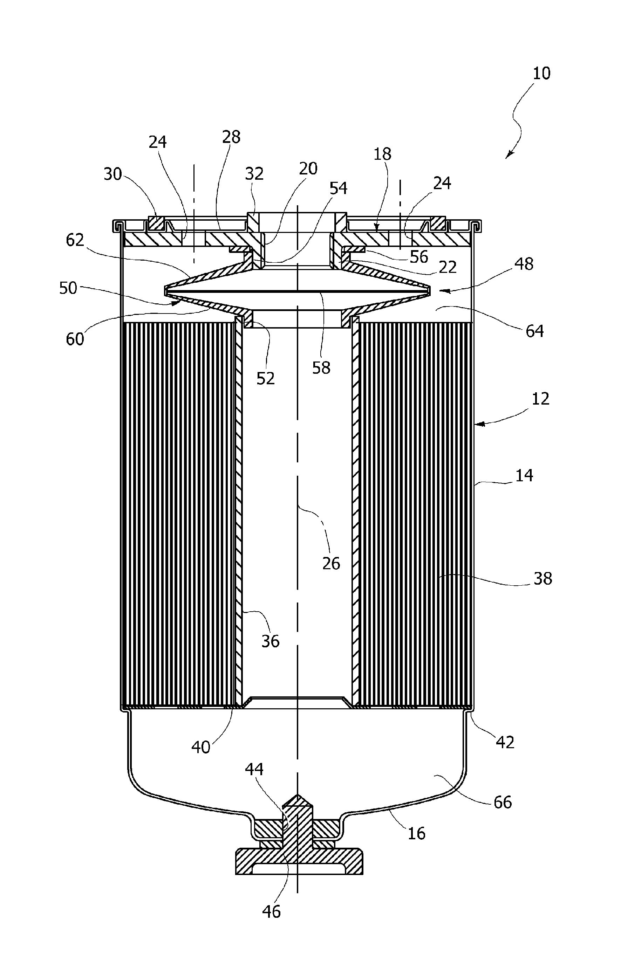

The present invention will now be described in detail with reference to the attached drawing, which is provided purely by way of non-limiting example and illustrates a schematic axial cross section of an embodiment of the present invention.

With reference to the figure, the number 10 designates a filter for diesel fuel according to the present invention.

The filter 10 comprises a casing 12 in the form of a cup, having a substantially cylindrical side wall 14 and a bottom 16.

Applied in a position corresponding to the top edge of the casing 12 is a closing plate 18. The plate 18 has a threaded central hole 20 provided with a collar 22 projecting towards the inside of the casing 12. The closing plate 18 is moreover provided with a plurality of holes 24 set eccentric with respect to the longitudinal axis 26 of the casing 12. The central hole 20 of the closing plate 18 is aligned to the longitudinal axis 26.

Applied on the outer side of the closing plate 18 is a lamina 28, the outer edge of which is fixed to the top edge of the casing 12 by means of crimping. The lamina 28 bears a first annular gasket 30 external to the holes 24 and a second gasket 32 that surrounds the central hole 20.

Housed within the casing 12 is a tubular metal sleeve 36 set coaxially with respect to the longitudinal axis 26.

A filter element 38, preferably constituted by a roll of paper, is set between the outer surface of the tubular sleeve 36 and the inner surface of the side wall of the casing 12. The metal sleeve 36 and the filter element 38 rest at the bottom on a perforated cap 40, the outer edge of which rests on a radial shoulder 42 of the casing 12.

The bottom 16 of the casing 12 is provided with a discharge hole 44 closed by a screw plug 46.

The filter 10 according to the present invention comprises a water separator 48, set between the top end of the tubular sleeve 36 and the hole 20 of the plate 18, which constitutes the hole for outlet of the filtered fuel.

The water separator 48 comprises an outer body 50 made of plastic material having a first collar 52 defining an inlet opening and a second collar 54 defining an outlet opening. The first collar 52 couples within the top end of the tubular sleeve 36. The second collar 54 couples on the outer side of the collar 22 of the fixing plate 18. Preferably, a plane gasket 56 is set between the top end of the second collar 54 and the inner surface of the fixing plate 18.

The water separator 48 comprises a separation membrane 58 constituted by a micromesh with a dimension of the mesh such as to prevent passage of the drops of water. The separation membrane 48 has a planar shape and extends orthogonally to the longitudinal axis 26 of the casing 12.

The body 50 of the separator 48 is preferably formed by two shells 60, 62 each having the shape of a truncated cone, fixed to one another in a position corresponding to their major diameter and provided, in a position corresponding to their minor diameter, with the respective collars 52, 54. The separation membrane 58 has its own outer edge fixed to the portion with major diameter of the body 50. The outer walls of the two shells 60, 62 are closed, and the two shells are fixed to one another in a liquid-tight way, for example by welding or snap fitting.

The filter 10 comprises an inlet chamber 64 defined between the fixing plate 18 and the top edge of the filter element 38. The filter 10 moreover comprises a chamber for collection of the water 66, defined between the bottom end of the filter element 38 and the bottom 16 of the casing 12.

In the foregoing description and in the claims, the terms "top" and "bottom" refer to the normal position of installation of the filter 10 on the engine of a vehicle.

Operation of the filter according to the present invention is described in what follows.

The flow of diesel fuel to be filtered enters the filter 10 through the holes 24. The flow of diesel fuel passes through the inlet chamber 34 and traverses the filter element 38 in an axial direction. The flow of diesel fuel collects in the collection chamber 66 and hence traverses the tubular sleeve 36 from beneath upwards. At the top end of the tubular sleeve 36, the flow of fuel enters the water separator 48, where there occurs a separation of the fuel from the water. Downstream of the separation membrane 58, the fuel comes out of the filter 10 through the outlet hole 20.

The water that remains on the side upstream of the separation membrane 58 decants on the bottom of the filter 10 and collects on the bottom of the collection chamber 66. When the level of the water in the collection chamber 66 exceeds a pre-set level (which can be detected by means of a sensor) the water can be discharged on the outside of the filter 10 through the discharge hole 44.

In the solution according to the present invention, the water separator 48 is set in the inlet chamber 64, on the outside of the tubular sleeve 36 and between the top end of the sleeve 36 and the outlet hole 20. This arrangement of the water separator enables the area of separation of the water to be positioned as far as possible from the collection chamber 66. This enables a flow of the fuel in the area of separation of water to be obtained that is slower and less turbulent. This enables drops of water of larger dimensions in suspension to be obtained, separation of which from the flow of fuel is easier. The solution according to the invention consequently enables a greater efficiency of the separation of water to be obtained as compared to the known solutions.

Of course, without prejudice to the principle of the invention, the details of construction and the embodiments may vary widely with respect to what is described and illustrated herein, without thereby departing from the scope of the invention as defined by the ensuing claims.

## Claims

1. A filter for diesel fuel, comprising:
- a casing (12) having a side wall (14), a bottom (16), and a closing plate (18), the closing plate having a plurality of holes (24) for entry of the fuel to be filtered and a central hole (20) for outlet of the filtered fuel;
- a tubular sleeve (36), set coaxially within the casing (12) and aligned to the hole for outlet of the fuel (20);
- a filter element (38), set in the space comprised between the tubular sleeve (36) and the side wall (14) of the casing (12) and arranged for being traversed in an axial direction by the fuel to be filtered, in which the filter element (38) has a bottom end set at a distance from the bottom (16) of the casing (12) so as to define, underneath the filter element (38), a collection chamber (66) and in which the tubular sleeve (36) has a bottom end that communicates with said collection chamber (66) and a top end in fluid communication with the outlet hole (20); and
- a water separator (48) with a separation membrane (58) formed by a micromesh,
said filter being **characterized in that** the water separator (48) is set between the top end of the tubular sleeve (36) and the outlet hole (20).

2. The filter according to Claim 1, **characterized in that** the water separator (48) is housed in an inlet chamber (64), set between the closing plate (18) and the top end of the filter element (38).

3. The filter according to Claim 1, **characterized in that** the water separator (48) comprises a body (50) having an inlet collar (52) coupled to the top end of the tubular sleeve (36), and an outlet sleeve (54) coupled to a collar (22) of the outlet hole (20).

4. The filter according to Claim 3, **characterized in that** the body (50) of the water separator (48) comprises two shells (60, 62) having the shape of a truncated cone fixed to one another in a position corresponding to their major diameter and provided with said collars (52, 54) in a position corresponding to their minor diameter.

5. The filter according to Claim 4, **characterized in that** the separation membrane (58) extends in a transverse direction with respect to the longitudinal axis (26) of the casing (12) and is fixed on its outer edge in a position corresponding to the part with major diameter of the body (50).
